# EUROPÄISCHE PATENTSCHRIFT

(11) **EP 2 078 899 B1**
(45) Veröffentlichungstag und Bekanntmachung des Hinweises auf die Patenterteilung: **29.07.2015**
(21) Anmeldenummer: 09150288.0
(22) Anmeldetag: 09.01.2009
(51) Int. Cl.: F24C 7/08

(54) **Verfahren zum Führen eines Garprogramms und Gargerät**
Method for controlling a cooking program and cooking device
Procédé de commande d'un programme de cuisson et appareil de cuisson

(30) Priorität: 10.01.2008 DE 102008003853
(43) Veröffentlichungstag der Anmeldung: 15.07.2009
(73) Patentinhaber: Rational AG, 86899 Landsberg a. Lech (DE)
(72) Erfinder: Hömme, Regina, 86152 Augsburg (DE)
(74) Vertreter: Weber-Bruls, Dorothée

(56) Entgegenhaltungen:
- EP-A- 1 384 951
- DE-A1- 4 217 943
- DE-A1- 19 718 399
- US-A- 4 914 277

## Beschreibung

Die vorliegende Erfindung betrifft ein Verfahren zum Führen eines Garprogramms in einem Gargerät.

Ein solches Verfahren lässt sich bspw. in einem Gargerät implementierten, wie es von der Anmelderin unter dem Handelsnamen SelfCooking Center(R) vertrieben wird. Dieses umfasst als Funktionseinheit bspw. einen Garprozessfühler, wie er insbesondere in der DE 299 23 21 5 U1 beschrieben ist, ist mit zahlreichem Zubehör verwendbar, wie bspw. einem speziellen Gargutträger für Geflügel, wie er in der EP 0 786 224 B1 beschrieben ist, und ist zur Durchführung zahlreicher Arbeitsprogramme, umfassend Garprogramme, Reinigungsprogramme und Auswertprogramme, ausgelegt, wobei eine Bedienperson über ein Touchscreen mit dem bekannten Gargerät kommunizieren kann. Obwohl dieses bekannte Gargerät zahlreiche automatisierte Arbeitsprogramme enthält, können noch stets Fehlbedienungen auftreten, insbesondere im Zusammenhang mit sowohl der Auswahl eines Arbeitsprogramms als auch der Bedienung einer Funktionseinheit und/oder eines Zubehörs zum Durchführen eines ausgewählten Arbeitsprogramms, da die dazu notwendigen Informationen meist über ein Bedienhandbuch oder eine Hilfsfunktion von einer Bedienperson aufgesucht werden müssen und dann noch das Lesen von Textpassagen fordert.

Arbeitsprogramme können dabei an sich von einer Vielzahl von Parametern abhängen, insbesondere nach Art einer Funktion variabel während ihres Ablaufes sich an bestimmte Gegebenheiten anpassen. Handelt es sich bei einem Arbeitsprogramm bspw. um ein Garprogramm, so kann dieses als eine Funktion einer zu erfassenden Kerntemperatur eines Garguts oder aber auch als Funktion eines vorgegebenen Energieverbrauchs eines Gargeräts ablaufen. Daher werden solche auf Funktionen zurückgreifende Garprogramme auch häufig als intelligente Garprogramme bezeichnet.

Ein weiteres Verfahren ist bspw. aus der DE 20 2006 001 655 U1 bekannt, wobei auf einer Anzeigeeinrichtung eines Heißluftdämpfers mittels einer Gerätesteuerung über eine Datenverbindung mit einer externen Datenquelle visuelle Gerätesoftware unabhängige Informationen in Form von Bildern und/oder Filmen angezeigt werden können. Dies ermöglicht unter anderem die Anzeige von Serviceanleitungen und/oder Bedienungsanleitungen, bspw. zur Unterstützung einer Bedienperson des Heißluftdämpfers bei der Ausübung seiner Arbeit durch Darstellung einer animierten realen oder einer Trickfilmfigur.

Aus der DE 10 2006 020 883 A1 ist ein Verfahren zur Durchführung eines zumindest teilweise automatisierten Reinigungsvorgangs in einem elektrischen Haushaltsherd bekannt, bei dem eine Assistenzfunktion gestartet wird und ein Dialogbetrieb stattfindet, in dem alle für die Durchführung des Reinigungsvorgangs erforderlichen Informationen an einer Anzeigevorrichtung angezeigt werden und in dem eine Bedienperson zur Eingabe von Informationen und/oder zur Bestätigung vorgeschlagener Maßnahmen über die Eingabevorrichtung aufgefordert wird, wobei die Anzeige aller für die Durchführung des Reinigungsvorgangs erforderlichen Informationen die Darstellung und Erläuterung der von der Bedienperson durchzuführenden Maßnahmen als Fließtext und Klartext umfasst.

Aus der DE 101 20 136 A1 ist ein Garverfahren bekannt, bei dem automatisch ein Gargut erkannt und eine Energiezufuhr zu diesem Gargut abhängig von der erkannten Gargutart und Gargutposition regelbar ist. Ferner können über eine Ausgabeeinheit des Gargeräts Anweisungen an eine Bedienperson desselben ausgegeben werden, wie zum Umrühren von Gargut oder Entnehmen von Gargut aus einem Garraum.

Die DE 101 51 924 A1 betrifft eine Eingabe- und Anzeigeeinheit für eine Backofensteuerung, deren einzelne Betriebsarten durch Piktogramme dargestellt sind, wobei Piktogramm-Kombinationen auswählbarer Betriebsarten oder ihrer einzelnen Grundfunktionen Texte zugeordnet sein können, bei denen es sich bspw. um Anweisungen in unterschiedlichen Landessprachen handeln kann.

Aus der DE 10 2004 008 737 A1 ist ein Verfahren zum Anleiten eines Benutzers eines Haushaltsgerätes beim Bedienen desselben bekannt, wobei eine optische Ausgabeeinrichtung zum Einsatz kommt und während des Anleitens zu berücksichtigende Bedienelemente des Haushaltsgerätes über zumindest ein optisches Markierelement gekennzeichnet werden.

Die US 4,914,277 offenbart eine elektronische Kontrolleinrichtung zum automatischen Kochen mit einer Anlernfunktion.

Auch aus der EP 1 384 951 A1 ist ein Verfahren bekannt, bei dem zu einem Garprogramm beim Auswählen desselben auf einer Anzeige- und Bedieneinrichtung Informationen zu einem gewünschten Garergebnis und die grundsätzliche Notwendigkeit des Einsatzes eines Kerntemperaturfühlers angezeigt werden.

Aufgabe der vorliegenden Erfindung ist es, ein Verfahren zum Führen eines Garprogramms in einem Gargerät zu liefern, das ermöglicht, dass das Gargerät einfach auch von ungeübten Bedienpersonen bedient werden kann, ohne Beeinträchtigung des jeweils gewünschten Ergebnisses.

Diese Aufgabe wird erfindungsgemäß durch Anspruch 1 gelöst.

Bevorzugte erfindungsgemäße Verfahren sind in den Ansprüchen 2 bis 13 beschrieben.

Bei einem Gargerät zum Durchführen eines erfindungsgemäßen Verfahrens können die Anzeigeeinrichtung und Bedieneinrichtung zumindest teilweise in einem ausgeführt sind, vorzugsweise umfassend zumindest ein Touchscreen.

Der Erfindung liegt somit die überraschende Erkenntnis zugrunde, dass auf einer Anzeigeeinrichtung eines Gargeräts automatisch einer Bedienperson nicht nur nach Auswahl eines Garprogramms Informationen über die Bedienung zumindest einer Funktionseinheit und/oder zumindest eines Zubehörs visualisiert dargeboten werden, bspw. in Form eines Kurzfilms, sondern zuvor auch visualisiert eine Hilfe zur Auswahl eines geeigneten Garprogramms geboten wird, so dass also eine Bedienperson Hilfstexte aus einem Handbuch oder über ein Hilfsprogramm weder aufsuchen noch lesen muss. Hierdurch kommt es nicht nur zur Zeiteinsparung, sondern auch zur Vermeidung von Bedienfehlern, also insgesamt zu einer Einsparung von Kosten.

Zur visualisierten Hilfe bei der Auswahl eines geeigneten Garprogramms aus einer Vielzahl möglicher, auswählbarer Garprogramme wird aufgrund der Intelligenz des zur Durchführung eines erfindungsgemäßen Verfahrens eingerichteten Gargeräts ein zu erwartender Verlauf der Kerntemperatur für jedes auswählbaren Garprogramm, und gegebenenfalls auch ein Energieverbrauch jedes auswählbaren Garprogramms und ein Raumbedarf jedes auswählbaren Garprogramms angezeigt. Da bei der Auswahl eines Garprogramms möglicherweise ebenfalls von Interesse ist, ob und ggf. welche Garprogramme zumindest zeitweise parallel dazu ablaufen können, bietet das Gargerät auch die Möglichkeit der Anzeige, wann welche weiteren Garprogramme parallel zu einem auswählbaren Garprogramm ablaufen können. Dies erleichtert eine Tagesablaufsplanung insbesondere in einer Großküche und spart Ressourcen. Die Intelligenz des Gargeräts ist dabei derart, dass nach Auswahl eines Garprogramms immer zum richtigen Zeitpunkt die richtige Bedieninformation angezeigt wird, so dass stets in Abhängigkeit von einem ausgewählten Garprogramm auf der Anzeigeeinrichtung alle für dieses Garprogramm notwendigen Bedieninformationen aufscheinen. Dabei kann vorgesehen sein, dass mit Auswahl eines Garprogramms von Anfang bis Ende ein Film abläuft, der sämtliche von einer Bedienperson durchzuführende Schritte zeigt und in den Zeiträumen, in denen keine aktiven Maßnahmen von einer Bedienperson einzuleiten sind, bspw. der Fortschritt des Ablaufs des Garprogramms in bekannter Weise wiedergegeben wird.

Weitere Merkmale und Vorteile der Erfindung ergeben sich aus der nachfolgenden Beschreibung, in der Ausführungsbeispiele anhand schematischer Zeichnungen im Detail erläutert werden. Dabei zeigt:
Figur 1 eine Teilschnittansicht durch einen Braten mit eingestecktem Garprozessfühler; und
Figur 2 eine Teilschnittansicht durch ein Geflügel auf einem Gargutträger.

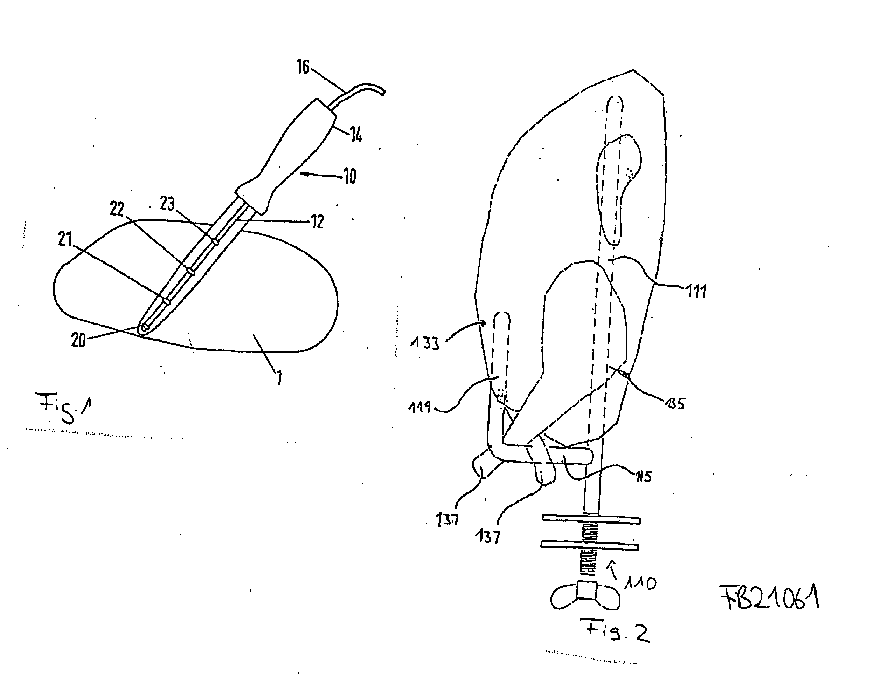

Bei kerntemperaturgeführten Garprozessen ist es notwendig, mit hoher Genauigkeit die Kerntemperatur zu erfassen, wozu spezielle Temperaturfühler entwickelt worden sind, wie bspw. in der DE 299 23 215 U1 der Anmelderin beschrieben. Danach muss, wie in Figur 1 dargestellt, in ein Gargut bspw. in Form eines Bratens 1 der Temperaturfühler 10 derart eingeführt werden, dass seine Spitze 12 im wesentlichen im Braten 1 plaziert ist, während ein Griff 14 samt daran sich anschließendem Kabel 16 außerhalb des Bratens 1 verbleiben. Wichtig ist dabei noch die Anordnung des Schafts 12 in dem Braten 1, und zwar so, dass zumindest einer der längs der Spitze 12 angeordneten Temperatursensoren 20 - 23 nahe an dem Kernpunkt, also dem Punkt im Braten 1 liegt, an dem die tiefste Temperatur während eines Garprozesses, also beim Ablauf eines Garprogramms, herrscht. Zwar ist es grundsätzlich möglich, auch bei einer Fehlplazierung der Spitze 12 im Braten 1 die Kerntemperatur zu berechnen, wobei es sich bei der Berechnung jedoch um eine Abschätzung der Kerntemperatur handelt, deren Genauigkeit um so größer ist, um so besser die Spitze 12 im Braten 1 plaziert ist.

Wird bei einem zur Durchführung eines erfindungsgemäßen Verfahrens eingerichteten, nicht gezeigten Gargerät ein Garprogramm ausgewählt, das in Abhängigkeit einer erfassten Kerntemperatur zu führten ist, so wird auf einer Anzeigeeinrichtung des Gargerätes, bspw. nach dem Anzeigen eines Fortschritts beim Vorheizen des Garraums und Anzeigen einer Anforderung zum Beladen des Garraums mit Gargut, gezeigt, wie ein in dem Garraum des Gargeräts angeordneter Temperaturfühler in das Gargut einzufügen ist. Zu diesem Zwecke läuft auf der Anzeigeeinrichtung ein kurzer Stummfilm, dem alle zu beachtenden Handgriffe entnehmbar sind, dass also eine Bedienperson desGargeräts kein Bedienhandbuch zu Hilfe ziehen muss, und auch nicht einen Text eines Hilfsprogramms aufrufen muss. Tatsächlich läuft die komplette Anweisung im wesentlichen visualisiert, so dass sie für Bedienpersonen mit unterschiedlichen Sprachkenntnissen verständlich sind, also keine Anpassung der Anweisungen an einen Aufstellungsort des Gargerätes, eine ausgewählte Bediensprache des Gargerätes oder dergleichen zu erfolgen hat.

Wählt eine Bedienperson bspw. das Garen von Geflügel aus, so wird auf der Anzeigeeinrichtung des Gargerätes unmittelbar angezeigt, welcher Gargutträger zu verwenden ist, wie die Bestückung des Gargutträgers zu erfolgen hat und wo der Gargutträger im Garraum zu plazieren ist.

Einer Bedienperson wird jedoch erfindungsgemäß auch eine visualisierte Hilfe bei der Auswahl eines Garprogramms gegeben, indem beispielsweise im Falle eines Garprogramms zum Implementieren eines Delta-T-Garens ein zu erwartender Verlauf der Kerntemperatur und eine daran angepasste Garraumtemperatur angezeigt werden, um eine Auswahl zu erleichtern. Auch können besondere Funktionen, Vorteile und Nutzen visualisiert dargestellt werden.

Es ist aber auch denkbar, dass eine Bedienperson die Aufgabe lösen möchte, eine möglichst große Anzahl von Gargütern gleichzeitig, also platzoptimiert, sowie auch möglicherweise energieoptimiert zu garen, ohne das dafür geeignete Garprogramm zu kennen. Zu diesem Zwecke kann sie sich für unterschiedliche Garprogramme, die für das jeweilige Gargut grundsätzlich geeignet sind, auf einer Anzeigeeinrichtung Filme zeigen lassen, denen unterschiedliche Garraumbestückungen mit dem jeweils dazugehörenden Energieverbrauch des Gargeräts visualisiert dargestellt werden.

Handelt es sich bei dem Gargut bspw. um Geflügel und soll eine möglichst große Anzahl von Geflügel im Garraum möglichst energiesparend gegart werden, so kann über die Anzeigeeinrichtung ein dafür geeignetes Garprogramm ausgewählt werden. Sobald dieses Garprogramm ausgewählt worden ist, werden der Bedienperson dann automatisch alle von ihr erforderlichen Handlungen visualisiert, bspw. in Form eines Trickfilmes, dargeboten, und zwar so, dass jeweils zum richtigen Zeitpunkt die richtige Handlungsanweisung erfolgt, die ein optimales Garergebnis sicherstellt.

In Figur 2 ist ein typischer Gargutträger 110 für ein Geflügel 133 mit drei wesentlichen Bestandteilen dargestellt, nämlich einem ersten Trageteil 111, das in einen Hohlraum 135 des Geflügels 133 einzufügen ist, einem Dressierteil 115, über dem die Schlegel 137 des Geflügels 133 zu kreuzen sind, und einem zweiten Trageteil 119, das zusammen mit dem Trageteil 111 einer Fixierung des Geflügels 133 dient.

Es kann erfindungsgemäß auf der Anzeigeeinrichtung ein Film mit Ton gezeigt werden, dem entnehmbar ist, dass in dem Fall, in dem bspw. Geflügel 133 gegart werden sollen, als Gargutträger Superspikes 110 zu verwenden sind, wobei die Größe der Superspikes 110 automatisch in Abhängigkeit von der Gargerätgröße angezeigt wird, ebenso wie die Anzahl der in den Garraum des jeweiligen Gargeräts anordbaren Superspikes 110 mit einer optimalen Bestückungsverteilung. Zudem wird jeder Handgriff gezeigt, mit dem das Geflügel 133 auf die Superspikes 110 mit den Teilen 111, 115, 119 zu plazieren ist, und wann die mit Geflügel 133 bestückten Superspikes 110 wo in den Garraum anzuordnen sind.

Eine Bedienperson muss also nicht entscheiden, welche Art und Größe eines Gargutträgers für ein spezielles Garprogramm notwendig sind, wo ein Gargutträger im Garraum zu plazieren ist, wo ein Gargutträger zu bestücken ist und wie ein Gargutträger zu bestücken ist; sondern es erscheint automatisch ein Film auf der Anzeigeeinrichtung des Gargerätes, dem all diese Informationen optisch entnehmbar sind, so dass sie für jede Bedienperson nachvollziehbar sind.

Selbstverständlich können über die Anzeigeeinrichtung des Gargerätes auch weitere Informationen erfindungsgemäß angezeigt werden, wie zu einem Kochrezept für ein spezielles Garprogramm, oder dazu, welche Garprogramme parallel zu einem bereits ausgewählten Garprogramm oder nach einem bereits ausgewählten Garprogramm durchgeführt werden können und/oder sollen. All diese Informationen können rein visuell übermittelt werden, ggf. unterstützt durch akustische Signale und/oder Anweisungen. Dies dient einem reibungslosen Arbeitsablauf in einer Küche, insbesondere einer Großküche, was schlussendlich auch erhebliche Kosteneinsparungen mit sich bringen kann.

### Bezugszeichenliste

- 1: Braten
- 10: Temperaturfühler
- 12: Spitze
- 14: Griff
- 16: Kabel
- 20 - 23: Temperatursensor
- 110: Superspikes
- 111: Trageteil
- 115: Dressierteil
- 119: Trageteil
- 133: Geflügel
- 135: Hohlraum
- 137: Schlegel

## Patentansprüche

1. Verfahren zum Führen eines Garprogramms in einem Gargerät zum Garen von Gargut (1, 133) in einem Garraum nach Auswahl des Garprogramms über eine Anzeigeeinrichtung und eine Bedieneinrichtung unter Einsatz einer Steuer- oder Regeleinrichtung, die in Wirkverbindung mit der Anzeigeeinrichtung und der Bedieneinrichtung sowie zumindest einer Funktionseinheit (10) und/oder zumindest einem Zubehör (110) des Gargeräts steht, mit folgenden Schritten:
• auf der Anzeigeeinrichtung zur Auswahl des Garprogramms aus zumindest zwei auswählbaren Garprogrammen zumindest visualisiert ein zu erwartender Garverlauf angezeigt wird, indem auf der Anzeigeeinrichtung für jedes auswählbare Garprogramm angezeigt wird, wie zumindest eine erste für ein Gargut charakteristische Größe über eine Vielzahl von Zeitpunkten des jeweils auswählbaren Garprogramms erwartet wird, und
• auf der Anzeigeeinrichtung nach Auswahl des Garprogramms, zumindest in Abhängigkeit des ausgewählten Garprogramms, zumindest visualisiert mindestens eine Anweisung zum Bedienen der Funktionseinheit (10) und/oder des Zubehörs (110) zum Durchführen des ausgewählten Garprogramms angezeigt wird, so dass nach Auswahl eines Garprogrammes immer zum richtigen Zeitpunkt die richtige Bedieninformation angezeigt wird.

2. Verfahren nach Anspruch 1, **dadurch gekennzeichnet, dass**
die Funktionseinheit ausgewählt wird aus zumindest
einem Sensor, insbesondere in Form eines in das Gargut oder eine Positionier- und/oder Befestigungseinrichtung einzusteckenden Garprozessfühlers, vorzugsweise Kerntemperaturfühlers (10),
einer Heizeinrichtung, vorzugsweise umfassend eine elektrische oder gasbetriebene Heizung und/oder zumindest eine Mikrowellenquelle, und
einer gerätefesten Speichereinrichtung.

3. Verfahren nach Anspruch 1 oder 2, **dadurch gekennzeichnet, dass** die Funktionseinheit ausgewählt wird als
eine Kühleinrichtung, vorzugsweise umfassend eine Einrichtung zum Führen eines Kühlmittels,
eine Feuchtigkeitszufuhreinrichtung, wie in Form eines Dampfgenerators oder Wasserzerstäubers,
eine Beschwadungseinrichtung, umfassend zumindest eine Beschwadungsdüse und/oder zumindest eine erste Absperreinrichtung,
eine Feuchtigkeitsabfuhreinrichtung, insbesondere in Form einer Ablöschdüse und/oder zumindest einer zweiten Absperreinrichtung,
eine Wasserzulaufeinrichtung, umfassend zumindest eine dritte Absperreinrichtung, eine vierte Absperreinrichtung, insbesondere in Form eines Tiegelventils,
oder eine Wärmespeichereinrichtung.

4. Verfahren nach einem der vorangehenden Ansprüche, **dadurch gekennzeichnet, dass** das Zubehör ausgewählt wird
als ein Gargutträger, umfassend ein Hordengestell, einen Hordengestellwagen, eine Einhängeleiter, ein Rost, ein Blech, insbesondere in Form eines Pizza-, Back- und/oder Bratbleches, einen Teller, einen Geflügelhalter (110), einen Bratspieß, einen Steakgrill, einen Korb und/oder ein Transport- und/oder Lagergefäß.

5. Verfahren nach einem der vorangehenden Ansprüche, **dadurch gekennzeichnet, dass** das Zubehör ausgewählt wird aus
einer Gargutbehandlungseinrichtung, wie einem Spachtel, einem Schaber, einem Schöpfmittel, einer Gabel, einem Messer oder einem Löffel,
einer externen Speichereinrichtung, wie in Form einer Speicherkarte,
einer Fernbedienung, insbesondere umfassend eine Freisprechanlage,
einer Anschlusseinrichtung zum Anschließen an das Internet oder ein Intranet oder zumindest einem weiteren Sensor, insbesondere in Form eines Sensors zur Erfassung des Ausgangszustands eines Garguts, wie einem Gewichtssensor.

6. Verfahren nach einem der vorangehenden Ansprüche , **dadurch gekennzeichnet, dass** die erste Größe bestimmt wird aus einem Gargrad, der vorzugsweise seinerseits bestimmt wird durch eine Kerntemperatur, eine Oberflächentemperatur, eine Bräunung, eine Krustierung, eine Feuchte, ein Gewicht, eine Größe und/oder eine Dichte des Garguts.

7. Verfahren nach einem der vorangehenden Ansprüchen, **dadurch gekennzeichnet, dass** auf der Anzeigeeinrichtung für jedes auswählbare Garprogramm zudem angezeigt wird, wie zumindest eine zweite für das Gargerät charakteristische Größe bestimmt wird durch einen Ressourcenverbrauch, der vorzugsweise seinerseits bestimmt wird durch die Energie, das Wasser, die Zeit und/oder den Raum für die Durchführung des jeweils auswählbaren Garprogramms, der am Ende des jeweils ausgewählten Garprogramms erwartet wird.

8. Verfahren nach einem der vorangehenden Ansprüche, **dadurch gekennzeichnet, dass** auf der Anzeigeeinrichtung für jedes auswählbare Garprogramm angezeigt wird, wann welches weitere auswählbare Garprogramm parallel in dem Garraum ablaufen kann, vorzugsweise unter Anzeige der ersten und/oder zweiten Größe jedes weiteren auswählbaren Garprogramms.

9. Verfahren nach einem der vorangehenden Ansprüche, **dadurch gekennzeichnet, dass** die Steuer- oder Regeleinrichtung in Abhängigkeit der Funktionseinheit (10) und/oder des Zubehörs (110) des ausgewählten Garprogramms die Anzeigeeinrichtung zum Anzeigen zumindest eines weiteren, auswählbaren, insbesondere zumindest teilweise parallel zum ausgewählten Garprogramm ablaufenden, Garprogramms steuert oder regelt.

10. Verfahren nach Anspruch 9, **dadurch gekennzeichnet, dass**
die Steuer- und Regeleinrichtung die Anzeigeeinrichtung zum Anzeigen visualisierter Anweisungen zum Durchführen des weiteren Garprogramms in Abhängigkeit der Funktionseinheit (10) und/oder des Zubehörs (110) des ausgewählten Garprogramms steuert oder regelt.

11. Verfahren nach einem der vorangehenden Ansprüche, **dadurch gekennzeichnet, dass** auf der Anzeigeeinrichtung für jedes ausgewählte Garprogramm angezeigt wird, wann das ausgewählte Garprogramm gestartet werden soll,
wann ein Garprozessfühler in ein Gargut eingeführt werden soll,
wann ein Garprozessfühler in ein anderes Gargut umgesteckt werden soll,
wann ein Garprozessfühler in eine Positionier- und/oder Befestigungseinrichtung eingebracht werden soll,
wie ein Garprozessfühler in ein Gargut und/oder die Positionier- und/oder Befestigungseinrichtung eingeführt werden soll,
wann ein Gargutträger mit einem Gargut bestückt werden soll,
welcher Gargutträger mit einem Gargut bestückt werden soll,
wie ein Gargutträger mit einem Gargut bestückt werden soll,
wie ein mit einem Gargut bestückter Gargutträger in den Garraum eingeführt werden soll,
wo ein mit einem Gargut bestückter Gargutträger in den Garraum eingeführt werden soll,
wann ein Gargut in den Garraum eingebracht werden soll,
wie ein Gargut in den Garraum eingebracht werden soll,
wann ein Gargut aus dem Garraum entfernt werden soll,
wie ein Gargut aus dem Garraum entfernt werden soll, und/oder wo ein Gargut aus dem Garraum entfernt werden soll.

12. Verfahren nach einem der vorangegangenen Ansprüche, **dadurch gekennzeichnet, dass** die visualisierte Anweisung in Form eines Films, mit oder ohne Ton und/oder mit oder ohne Text, stattfindet.

13. Verfahren nach Anspruch 12, **dadurch gekennzeichnet, dass**
Ton und/oder Text in Abhängigkeit einer Landessprache und/oder eines Aufstellungsorts des Gargeräts ausgewählt wird bzw. werden.

## Claims

1. A method for controlling a cooking program in a cooking device for cooking products to be cooked (1, 133) in a cooking chamber following selection of the cooking program by means of a display device and an operating device, using a control or regulating device which is in operative connection with the display device and the operating device as well as at least one function unit (10) and/or at least one accessory (110) of the cooking device, having the steps of:
• one cooking process which is to be expected from at least two selectable cooking programs is displayed, at least in a visualized manner, on the display device for selecting the cooking program, in that it is displayed on the display device, for each selectable cooking program, how at least one first variable which is characteristic of a product to be cooked is expected over a plurality of points in times of the selectable cooking program in each case, and
• at least one instruction for operating the function unit (10) and/or the accessory (110) for executing the selected cooking program is displayed, at least in a visualized manner, on the display device following selection of the cooking program, depending at least on the selected cooking program, so that following selection of a cooking program the correct operating information is always displayed at the right time.

2. The method according to Claim 1, **characterized in that**
the function unit is selected from at least
one sensor, in particular in the form of a cooking process sensor which is to be inserted into the product to be cooked or a positioning and/or fixing means, preferably a core temperature sensor (10),
a heating device, preferably comprising an electrical or gas-fired heating device and/or at least one microwave source, and
a storage device which is fixed to the device.

3. The method according to Claim 1 or 2, **characterized in that** the function unit is selected as
a cooling device, preferably comprising a device for guiding a coolant,
a device for supplying humidity such as in the form of a steam generator or water atomizer,
a steaming device, comprising at least one steaming nozzle and/or at least one first shut-off device,
a device for removing humidity, in particular in the form of a quenching nozzle and/or at least one second shut-off device,
a water inlet device, comprising at least one third shut-off device,
a fourth shut-off device, in particular in the form of a pot valve,
or a heat storage device.

4. The method according to any one of the preceding claims, **characterized in that** the accessory is selected
as a holder of a product to be cooked, comprising an oven rack, a mobile oven rack, a suspension, a grate, a sheet, in particular in the form of a pizza tray, baking tray and/or roasting tin, a plate, a poultry holder (110), a spit, a steak grill, a basket and/or a transporting and/or storage vessel.

5. The method according to any one of the preceding claims, **characterized in that** the accessory is selected from
a device for handling a product to be cooked such as a spatula, a scraper, ladling means, a fork, a knife or a spoon,
an external storage device such as in the form of a memory card,
a remote control, in particular comprising a hands-free device,
a connecting device for connecting to the Internet or an Intranet, or
at least one additional sensor, in particular in the form of a sensor for detecting the initial condition of a product to be cooked such as a weight sensor.

6. The method according to any one of the preceding claims, **characterized in that** the first variable is determined from a degree of cooking which is preferably, in turn, determined by a core temperature, a surface temperature, a browning, a formation of a crust, a humidity, a weight, a size and/or a density of the product to be cooked.

7. The method according to any one of the preceding claims, **characterized in that** it is additionally displayed on the display device for each selectable cooking program how at least a second variable which is characteristic of the cooking device is determined by the consumption of resources which is preferably, in turn, determined by the energy, the water, the time and/or the space for executing the selectable cooking program in each case, at the end of the cooking program selected in each case.

8. The method according to any one of the preceding claims, **characterized in that** it is displayed on the display device for each selectable cooking program when which additional selectable cooking program can run in parallel in the cooking chamber, preferably by displaying the first and/or second variable of each additional selectable cooking program.

9. The method according to any one of the preceding claims, **characterized in that**, depending on the function unit (10) and/or the accessory (110) of the selected cooking program, the control or regulating device controls or regulates the display device for displaying at least one additional, selectable cooking program which, in particular, runs at least in part parallel to the selected cooking program.

10. The method according to Claim 9, **characterized in that**
the control and regulating device controls or regulates the display device for displaying visualized instructions for executing the further cooking program depending on the function unit (10) and/or the accessory (110) of the selected cooking program.

11. The method according to any one of the preceding claims, **characterized in that** it is displayed on the display device for each selected cooking program,
when the selected cooking program is to be started,
when a cooking process sensor is to be introduced into a product to be cooked, when a cooking process sensor is to be inserted into a different product to be cooked, when a cooking process sensor is to be inserted into a positioning and/or fixing device, how a cooking process sensor is to be introduced into a product to be cooked and/or the positioning and/or fixing device,
when a holder of a product to be cooked is to be equipped with a product to be cooked, which holder of the product to be cooked is to be equipped with a product to be cooked,
how a holder of a product to be cooked is to be equipped with a product to be cooked, how a holder of a product to be cooked equipped with a product to be cooked is to be fed into the cooking chamber,
where a holder of a product to be cooked equipped with a product to be cooked is to be fed into the cooking chamber,
when a product to be cooked is to be fed into the cooking chamber,
how a product to be cooked is to be fed into the cooking chamber,
when a product to be cooked is to be removed from the cooking chamber,
how a product to be cooked is to be removed from the cooking chamber, and/or where a product to be cooked is to be removed from the cooking chamber.

12. The method according to any one of the preceding claims, **characterized in that** the visualized instructions are provided in the form of a film, with or without sound and/or with or without text.

13. The method according to Claim 12, **characterized in that** the sound and/or text is/are selected depending on a country's language and/or the location of the cooking device.

## Revendications

1. Procédé d'exécution d'un programme de cuisson dans un appareil de cuisson pour la cuisson d'un aliment à cuire (1, 133) dans une chambre de cuisson après avoir sélectionné le programme de cuisson sur un dispositif d'affichage et un dispositif de fonctionnement au moyen d'un dispositif de commande ou de régulation, qui est en communication opérationnelle avec le dispositif d'affichage et le dispositif de fonctionnement ainsi qu'avec au moins une unité fonctionnelle (10) et/ou au moins un accessoire (110) de l'appareil de cuisson, avoir les étapes consistant à :
• afficher sur le dispositif d'affichage, pour sélectionner le programme de cuisson parmi au moins deux programmes de cuisson sélectionnables, au moins un processus de cuisson attendu visualisé, en va être affichée sur le dispositif d'affichage pour chaque programme de cuisson sélectionné, la façon dont au moins une première grandeur caractéristique pour un aliment à cuire parmi une pluralité de moments de chaque programme de cuisson sélectionnable est prévue, et
• afficher sur le dispositif d'affichage, après la sélection du programme de cuisson, au moins en fonction du programme de cuisson sélectionné, au moins une instruction au moins visualisée, pour actionner l'unité fonctionnelle (10) et/ou l'accessoire (110) afin d'exécuter le programme de cuisson sélectionné, de telle sorte qu'après la sélection d'un programme de cuisson, les informations de fonctionnement sont affichées toujours au bon moment.

2. Procédé selon la revendication 1, **caractérisé en ce que** l'unité fonctionnelle est choisie parmi au moins
un capteur, en particulier sous la forme d'une sonde de processus de cuisson à insérer dans l'aliment à cuire ou un dispositif de positionnement et/ou de fixation, de préférence une sonde de température à coeur (10),
un dispositif de chauffage, comprenant de préférence un chauffage électrique ou à gaz et/ou au moins une source de micro-ondes, et
un dispositif de mémoire fixé sur l'appareil.

3. Procédé selon la revendication 1 ou 2, **caractérisé en ce que** l'unité fonctionnelle est sélectionnée sous la forme
d'un dispositif de refroidissement, comprenant de préférence un dispositif pour guider un fluide de refroidissement,
d'un dispositif d'alimentation en humidité, comme un générateur de vapeur ou un vaporisateur d'eau,
d'un dispositif d'humidification, comprenant au moins une buse d'humidification et/ou au moins un premier dispositif de coupure,
d'un dispositif d'évacuation d'humidité, en particulier sous la forme d'un buse de neutraliser et/ou d'au moins un deuxième dispositif de coupure,
d'un dispositif d'admission d'eau comprenant au moins un troisième dispositif de coupure,
d'un quatrième dispositif de coupure, en particulier sous la forme d'une soupape de pot,
ou d'un accumulateur de chaleur.

4. Procédé selon l'une quelconque des revendications précédentes, **caractérisé en ce que** l'accessoire est choisi sous la forme d'un support d'aliment à cuire, y compris une grille, un chariot à grille, un crochet-de suspension, un treillis, une plaque en particulier sous la forme d'une plaque à pizza, d'une plaque à pâtisserie et/ou d'une plaque de four, une assiette, un support de volaille (110), une broche, une grille de steak, un panier et/ou un récipient de stockage et/ou de transport.

5. Procédé selon l'une quelconque des revendications précédentes, **caractérisé en ce que** l'accessoire est choisi parmi
un dispositif de traitement d'aliment à cuire comme une spatule, une raclette, une louche, une fourchette, un couteau ou une cuillère,
un dispositif de mémoire externe, comme sous la forme d'une carte mémoire,
une télécommande, en particulaire comprenant notamment un kit mains-libres,
un dispositif de connexion pour la connexion à l'Internet ou un intranet, ou à au moins un capteur supplémentaire, en particulier sous la forme d'un capteur pour détecter l'état de sortie d'un aliment à cuire, comme un capteur de poids.

6. Procédé selon l'une quelconque des revendications précédentes, **caractérisé en ce que** la première grandeur est déterminée à partir d'un degré de cuisson, qui est de préférence à son tour déterminé par une température à coeur, une température de surface, un brunissement, un croustillant, une humidité, un poids, une taille et/ou une épaisseur de l'aliment à cuire.

7. Procédé selon l'une quelconque des revendications précédentes, **caractérisé en ce que** va également être affichée sur le dispositif d'affichage, pour chaque programme de cuisson sélectionnable, la façon dont au moins une deuxième grandeur caractéristique de l'appareil de cuisson est déterminée par une consommation de ressources, qui est de préférence à son tour déterminée par l'énergie, l'eau, le temps et/ou l'espace pour l'exécution de chaque programme de cuisson sélectionnable, qui est attendue à la fin du programme de cuisson sélectionné.

8. Procédé selon l'une quelconque des revendications précédentes, **caractérisé en ce que** va être affiché sur le dispositif d'affichage, pour chaque programme de cuisson sélectionné, le moment où chaque autre programme de cuisson sélectionné peut être exécuté en parallèle dans le chambre de cuisson, de préférence sous l'affichage de la première et/ou seconde grandeur de chaque autre programme de cuisson sélectionnable.

9. Procédé selon l'une quelconque des revendications précédentes, **caractérisé en ce que** le dispositif de commande ou de régulation en fonction de l'unité fonctionnelle (10) et/ou l'accessoire (110) du programme de cuisson sélectionné, commande ou régule le dispositif d'affichage pour afficher au moins un programme de cuisson sélectionnable supplémentaire, en particulier exécuté au moins partiellement en parallèle au programme de cuisson.

10. Procédé selon la revendication 9, **caractérisé en ce que** le dispositif de commande et de régulation commande ou régule le dispositif d'affichage pour afficher des instructions visualisées pour exécuter le programme de cuisson supplémentaire, en fonction de l'unité fonctionnelle (10) et/ou de l'accessoire (110) du programme de cuisson sélectionné.

11. Procédé selon l'une quelconque des revendications précédentes, **caractérisé en ce que** va être affiché sur le dispositif d'affichage, pour chaque programme de cuisson sélectionné,
le moment où le programme de cuisson sélectionné doit commencer,
le moment où une sonde de processus de cuisson doit être introduite dans un aliment à cuire,
le moment où une sonde de processus de cuisson doit être transférée dans un autre aliment à cuire,
le moment où une sonde de processus de cuisson doit être amenée dans un dispositif de positionnement et/ ou de fixation,
la façon dont une sonde de processus de cuisson doit être introduite dans un aliment à cuire et/ou le dispositif de positionnement et/ou de fixation,
le moment où un support d'aliment à cuire doit être chargé d'un aliment à cuire,
le support d'aliment à cuire qui doit être chargé d'un aliment à cuire,
la façon dont un support d'aliment à cuire doit être chargé d'un aliment à cuire, la façon dont un support d'aliment à cuire chargé d'un aliment à cuire doit être introduit dans la chambre de cuisson,
où introduire un support d'aliment à cuire chargé d'un aliment à cuire doit être introduit dans la chambre de cuisson,
le moment où un aliment à cuire doit être amené dans la chambre de cuisson,
la façon dont un aliment à cuire doit être amené dans la chambre de cuisson, le moment où un aliment à cuire doit être retiré de la chambre de cuisson,
la façon dont un aliment à cuire doit être retiré de la chambre de cuisson, et/ou où un aliment à cuire doit être retiré de la chambre de cuisson.

12. Procédé selon l'une quelconque des revendications précédentes, **caractérisé en ce que** l'instruction visualisée se présente sous la forme d'un film, avec ou sans son, et/ou avec ou sans texte.

13. Procédé selon la revendication 12, **caractérisé en ce que** le son et/ou le texte est sélectionné en fonction de la langue d'un pays et/ou d'un lieu d'installation de l'appareil de cuisson.
